(19) Europäisches Patentamt
European Patent Office
Office européen des brevets

(11) EP 3 547 172 A1

(12) **EUROPEAN PATENT APPLICATION**

(43) Date of publication:
**02.10.2019 Bulletin 2019/40**

(51) Int Cl.:
***G06F 17/50*** *(2006.01)*

(21) Application number: **18164568.0**

(22) Date of filing: **28.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
- **AHUJA, Naresh**
  **122018 Gurgaon, Haryana (IN)**
- **ARAVAMUDHAN, Karthik**
  **201012 Ghaziabad (IN)**

(74) Representative: **Patentanwaltskanzlei WILHELM & BECK**
**Prinzenstraße 13**
**80639 München (DE)**

(54) **SYSTEM AND METHOD FOR PIPING SUPPORT DESIGN**

(57) A piping stress analysis system (200) is provided. The piping stress analysis system (200) obtains piping data associated with one or more pipes (702), generates piping stresses based on the piping data using mathematical models, obtains mathematical coefficients based on the piping stresses, and generates an updated set of piping stresses using the mathematical coefficients. The updated set of piping stresses are used for designing a support structure (701) for the pipes (702) in a time and cost effective manner.

FIG 2

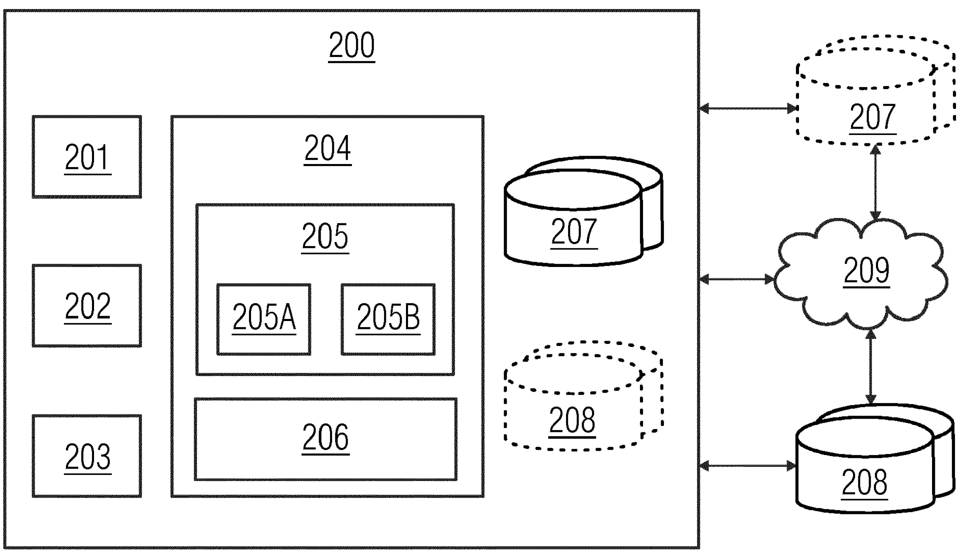


EP 3 547 172 A1

## Description

The present invention relates to designing support structures for piping based on estimation of induced stresses.

Support structures, typically used in power plants for piping arrangements include dynamic clamps. FIG 1 illustrates a perspective view of a support structure 100 of the state of the art, supporting a pipe 101. As shown in FIG 1, the support structure 100 of the state of the art comprises a standard dynamic clamp 102 being held in position around the pipe 101, by a pair of propping members 103 and 104, known as struts. Such a support structure 100 is known to induce low amount of stresses at a pipe-trunnion interface 105. However, designing and manufacturing of such support structures 100 is costly, time consuming and labour intensive. Alternatively, welded attachment geometries for support structures are also known to a person skilled in the art. However, such welded geometries induce high amount of stresses in pipe attachment interfaces, which are required to be accurately estimated and considered while designing the support structures.

Conventional methods and systems known to a person skilled in the art for estimating induced stresses in support structures for piping include rigorous finite element analysis methods. The finite element analysis methods, although accurate, are required to be executed on a case to case basis thereby resulting in a costly and time consuming process of estimating induced stresses and designing the support structures. Alternatively, methods such as WRC-297 (Welding research council bulletin no. -297) are used for estimating induced stresses in mechanical components. However, such methods fail to provide accuracy of estimation at higher induced stress levels, thereby resulting in an inaccurate estimation leading to faulty designs of the support structures.

Therefore, it is an object of the present invention to provide a piping stress analysis system and method that accurately estimates induced stresses required for designing a reliable piping support structure without increase in costs and time consumed.

The piping stress analysis system and method disclosed in the present invention achieves the aforementioned object, by obtaining mathematical co-efficients based on piping stresses estimated using conventional statistical models and updating these piping stresses based on the mathematical co-efficients, the updated piping stresses being used for designing a support structure for one or more pipes.

According to the present invention, a piping stress analysis system is provided. The piping stress analysis system, in one aspect of the present invention, is installed on and accessible by a user device, for example, a personal computing device, a workstation, a client device, a network enabled computing device, any other suitable computing equipment, and combinations of multiple pieces of computing equipment. In another aspect, of the present invention, the piping stress analysis system is downloadable and usable on the user device, and is configured as a web based platform, for example, a website hosted on a server or a network of servers, and/or is implemented in the cloud computing environment. In yet another aspect of the present invention, the piping stress analysis system comprises a non-transitory computer readable storage medium and at least one processor communicatively coupled to the non-transitory computer readable storage medium. As used herein, "non-transitory computer readable storage medium" refers to all computer readable media, for example, non-volatile media, volatile media, and transmission media except for a transitory, propagating signal. The non-transitory computer readable storage medium is configured to store computer program instructions defined by modules of the piping stress analysis system comprising, for example, a data reception module, a first mathematical model, a second mathematical model, and a stress optimization statistical model. The processor is configured to execute the defined computer program instructions.

The data reception module obtains piping data associated with one or more pipes. According to a preferred embodiment of the present invention, the piping data is associated with one or more pipes of a power plant. In one aspect of the present invention, "piping data" refers to physical data associated with the pipes to be supported by the support structure. In this aspect of the present invention, the physical data comprises an outer diameter, a wall thickness, a length, and a material of each of the pipes. In another aspect of the present invention, "piping data" refers to physical data associated with the support structure. In this aspect of the present invention, the physical data comprises an outer diameter, a wall thickness, a length, and a material of the support structure. In this aspect of the present invention, the support structure is configured as a trunnion pipe. In yet another aspect of the present invention, "piping data" refers to external factors affecting the support structure and the pipes. In this aspect of the present invention, the external factors comprise a mechanical load exerted on the support structure, a mechanical load exerted on the pipes, an internal pressure of the pipes, and an internal temperature of the pipes. According to an embodiment of the present invention, the data reception module obtains the piping data from one or more external sources comprising repositories storing piping and instrumentation diagrams, piping material databases, piping datasheets, piping standards, piping codes, etc. According to an embodiment of the present invention, the piping stress analysis system comprises a piping database for storing the piping data obtained.

The first mathematical model generates a first set of piping stresses based on the piping data. The first mathematical model is a physics based numerical model, for example, a finite element analysis model. The first mathematical model processes piping data comprising a plurality of combinations of, for example, piping geometries, piping materials, loading, etc. The first mathematical model generates the first set of piping stresses comprising a membrane stress and/or a bending stress experienced by the support structure that is to be designed for supporting each of the combinations processed. The membrane stresses are a stress component of the general stresses experienced by pipes, that is, pressure vessels commonly having the form of spheres, cylinders, cones, ellipsoids, or composites of such shapes. When a thickness of such a vessel is small in comparison with other dimensions of the pressure vessel, the vessel is referred to as a membrane and the associated stress resulting from a pressure contained within the vessel is called membrane stress. These membrane stresses are average tension or compression stresses and are assumed to be uniform across the vessel wall, acting tangential to surface. The membrane or wall is assumed to offer no resistance to bending. When the wall offers resistance to bending, bending stresses occur in addition to membrane stresses.

The second mathematical model generates a second set of piping stresses based on the piping data. The second mathematical model is an empirical model, for example, WRC 297 (Welding Research Council bulletin no. 297) which is a parameterized procedure for stress calculation especially around a junction of a support structure and a pipe that the support structure supports. According to a preferred embodiment of the present invention, the piping data that the second mathematical model processes is same, as the piping data that the first mathematical model has processed. That is, the piping data comprises a plurality of combinations of, for example, piping geometries, piping materials, loading, etc. The second mathematical model generates the second set of piping stresses comprising a membrane stress and/or a bending stress experienced by the support structure to be designed for supporting each of the combinations processed.

The stress optimization statistical model comprises a co-efficient generation module and a stress computation module. The stress optimization statistical model is a regression model. The co-efficient generation module obtains mathematical co-efficients based on the first set of piping stresses and the second set of piping stresses. The mathematical co-efficients comprise at least one mathematical constant. The co-efficient generation module comprises a relationship plotting module and a relationship identification module. The relationship plotting module generates at least one relationship plot of the first set of piping stresses and the second set of piping stresses. As used herein, "relationship plot" refers to a plurality of data points each representing a membrane stress and/or a bending stress. In one aspect of the present invention, relationship plot comprises a plot of membrane stresses that each of the first mathematical model and the second mathematical model generate. In another aspect of the present invention, the relationship plot comprises a plot of membrane stresses and bending stresses in combination, that each of the first mathematical model and the second mathematical model generate. The relationship identification module identifies a data pattern in each relationship plot, associated with the first set of piping stresses and the second set of piping stresses. The relationship identification module identifies the data pattern by determining at least one data point on each relationship plot such that, a line drawn through this data point accommodates below the line, a majority of other data points on the relationship plot. The mathematical co-efficients are obtained from a slope and a 'Y' intercept of this data pattern, that is, the line. According to a preferred embodiment of the present invention, the piping stress analysis system comprises a co-efficient database storing the mathematical co-efficients along with the first set of piping stresses and the second set of piping stresses.

The stress computation module generates an updated set of piping stresses using the mathematical co-efficients. The updated set of piping stresses are used for designing a support structure for the one or more pipes. Advantageously, the stress computation module updates the second set of piping stresses generated by the second mathematical model, using the mathematical co-efficients. The piping stress analysis system optimizes stresses using the mathematical co-efficients in order to decrease anomalies in design of the support structure that arise due to a variance in the inputs provided to mathematical models and to ensure reliability and safety of the support structure design.

Also disclosed herein, is a method for determining piping stresses for a pipe by using the piping stress analysis system described above. According to the method disclosed herein, the data reception module obtains design data associated with the pipe. As used herein, "design data" refers to piping data associated with a single pipe, that is, instead of a plurality of pipe geometries, pipe materials and pipe loading parameters, the design data comprises data associated with geometry, material, and loading of a single pipe to be supported by the support structure being designed. The design data also comprises data associated with the support structure intended to be used. The second mathematical model generates initial piping stresses comprising membrane stresses and/or bending stresses, based on the design data. The co-efficient generation module obtains the mathematical co-efficients from the co-efficient database based on the initial piping stresses. The stress computation module generates updated piping stresses using the initial piping stresses and the mathematical co-efficients. A support structure is then designed for the pipe based on the updated piping stresses. According to a preferred embodiment, of the present invention, the method comprises validating the updated piping stresses based on a predefined stress range defined based on standards, for example, ASME/EP piping codes, etc. According to this embodiment, when the updated piping stresses are not valid with respect to the predefined stress range, the method comprises modifying the design data, for example, by modifying geometry of the support structure, and reiterating the steps of generating initial piping stresses, obtaining mathematical co-efficients, generating updated piping stresses, and validating updated piping stresses until the updated piping stresses are valid with respect to the predefined stress range.

Also disclosed herein, is a method for analyzing piping stresses for one or more pipes. According to the method disclosed herein, piping data associated with the one or more pipes is obtained, at least a first set of piping stresses based on the piping data are generated by a first mathematical model, at least a second set of piping stresses based on the piping data are generated by a second mathematical model, mathematical co-efficients based on the first set of piping stresses and the second set of piping stresses are obtained by generating at least one relationship plot and identifying a data pattern in the at least one relationship plot, and an updated set of piping stresses using the mathematical co-efficients are generated. According to the method disclosed herein, the updated set of piping stresses are used for designing a support structure for one or more pipes.

Also disclosed herein is, a computer program product comprising a non-transitory computer readable storage medium storing computer program codes that comprise instructions executable by at least one processor for performing the method steps disclosed above for analyzing piping stresses for one or more pipes and the method steps disclosed above for designing a support structure for one or more pipes by employing the piping stress analysis system.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

| | |
|---|---|
| FIG 1 | illustrates a perspective view of a support structure of the state of the art, supporting a pipe. |
| FIG 2 | illustrates a piping stress analysis system for analyzing piping stresses for one or more pipes. |
| FIG 3 | is a block diagram illustrating architecture of a computer system employed by the piping stress analysis system illustrated in FIG 2. |
| FIG 4 | is a process flowchart illustrating a method for analyzing piping stresses for one or more pipes employing the piping stress analysis system illustrated in FIG 2. |
| FIG 5 | is a process flowchart illustrating a method for designing a support structure for one or more pipes by using the piping stress analysis system illustrated in FIG 2. |
| FIGS 6A-6B | illustrate relationship plots between one or more sets of piping stresses generated by the piping stress analysis system. |
| FIG 7 | illustrates a perspective view of an embodiment of a support structure for which the stresses have been determined by employing the piping stress analysis system illustrated in FIG 2 and the process flow chart illustrated in FIG 5. |

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

FIG 2 illustrates a piping stress analysis system 200 for analyzing piping stresses for one or more pipes. The piping stress analysis system 200 comprises a data reception module 201, a first mathematical model 202, a second mathematical model 203, and a stress optimization statistical model 204. The stress optimization statistical model 204 comprises a co-efficient generation module 205 and a stress computation module 206. The co-efficient generation module 205 comprises a relationship plotting module 205A and a relationship identification module 205B. The piping stress analysis system 200 also comprises databases, for example, a co-efficient database 207 and a piping database 208. The databases 207 and/or 208 may reside either internal to or external to the piping stress analysis system 200 as shown in FIG 2. The piping stress analysis system 200 is in communication with the databases 207 and/or 208 via a communication network 209. The communication network 209 comprises, for example, a wired network, a wireless network, or a cloud based network. The communication network 209 may also represent a network shared for Internet of Things (IoT).

FIG 3 is a block diagram illustrating architecture of a computer system 300 employed by the piping stress analysis system 200 illustrated in FIG 2. The piping stress analysis system 200 employs the architecture of the computer system 300 illustrated in FIG 3. The computer system 300 is programmable using a high level computer programming language. The computer system 300 may be implemented using programmed and purposeful hardware. As illustrated in FIG 3, the computer system 300 comprises a processor 301, a non-transitory computer readable storage medium such as a memory unit 302 for storing programs and data, an input/output (I/O) controller 303, a network interface 304, a data bus 305, a display unit 306, input devices 307, a fixed media drive 308 such as a hard drive, a removable media drive 309 for receiving removable media, output devices 310, etc. The processor 301 refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor 301 may also be implemented as a processor set comprising, for example, a general purpose microprocessor and a math or graphics coprocessor. The processor 301 is selected, for example, from the Intel® processors, Advanced Micro Devices (AMD®) processors, International Business Machines (IBM®) processors, etc. The piping stress analysis system 200 disclosed herein is not limited to a computer system 300 employing a processor 301. The computer system 300 may also employ a controller or a microcontroller. The processor 301 executes the modules, for example, 201, 202, 203, 204, 205, 205A, 205B, 206, etc., of the piping stress analysis system 200.

The memory unit 302 is used for storing programs, applications, and data. For example, the data reception module 201, the first mathematical model 202, the second mathematical model 203, the stress optimization statistical model 204, the co-efficient generation module 205, relationship plotting module 205A, the relationship identification module 205B, the stress computation module 206, etc., of the piping stress analysis system 200 are stored in the memory unit 302 of the computer system 300. The memory unit 302 is, for example, a random access memory (RAM) or another type of dynamic storage device that stores information and instructions for execution by the processor 301. The memory unit 302 also stores temporary variables and other intermediate information used during execution of the instructions by the processor 301. The computer system 300 further comprises a read only memory (ROM) or another type of static storage device that stores static information and instructions for the processor 301. The I/O controller 303 controls input actions and output actions performed by the piping stress analysis system 200.

The network interface 304 enables connection of the computer system 300 to the communication network 209. For example, the piping stress analysis system 200 connects to the communication network 209 via the network interface 304. In an embodiment, the network interface 304 is provided as an interface card also referred to as a line card. The network interface 304 comprises, for example, interfaces using serial protocols, interfaces using parallel protocols, and Ethernet communication interfaces, interfaces based on wireless communications technology such as satellite technology, radio frequency (RF) technology, near field communication, etc. The data bus 305 permits communications between the modules, for example, 201, 202, 203, 204, 205, 205A, 205B, 206, 207, 208, etc., of piping stress analysis system 200.

The display unit 306, via a graphical user interface (GUI) (not shown), displays information such as relationship plots, etc., for allowing a user to provide his/her inputs. The display unit 306 comprises, for example, a liquid crystal display, a plasma display, an organic light emitting diode (OLED) based display, etc. The input devices 307 are used for inputting data into the computer system 300. The input devices 307 are, for example, a keyboard such as an alphanumeric keyboard, a touch sensitive display device, and/or any device capable of sensing a tactile input.

Computer applications and programs are used for operating the computer system 300. The programs are loaded into the fixed media drive 308 and into the memory unit 302 of the computer system 300 via the removable media drive 309. In an embodiment, the computer applications and programs may be loaded directly via the communication network 209. Computer applications and programs are executed by double clicking a related icon displayed on the display unit 306 using one of the input devices 307. The output devices 310 output the results of operations performed by the piping stress analysis system 200.

The processor 301 executes an operating system, for example, the Linux® operating system, the Unix® operating system, any version of the Microsoft® Windows® operating system, the Mac OS of Apple Inc., the IBM® OS/2, etc. The computer system 300 employs the operating system for performing multiple tasks. The operating system is responsible for management and coordination of activities and sharing of resources of the computer system 300. The operating system further manages security of the computer system 300, peripheral devices connected to the computer system 300, and network connections. The operating system employed on the computer system 300 recognizes, for example, inputs provided by the users using one of the input devices 307, the output display, files, and directories stored locally on the fixed media drive 308. The operating system on the computer system 300 executes different programs using the processor 301. The processor 301 and the operating system together define a computer platform for which application programs in high level programming languages are written.

The processor 301 of the computer system 300 employed by the piping stress analysis system 200 retrieves instructions defined by the modules, for example, 201, 202, 203, 204, 205, 205A, 205B, 206, etc., of the piping stress analysis system 200 for performing respective functions disclosed above. The processor 301 retrieves instructions for executing the modules, for example, 201, 202, 203, 204, 205, 205A, 205B, 206, etc., of the piping stress analysis system 200 from the memory unit 302. A program counter determines the location of the instructions in the memory unit 302. The program counter stores a number that identifies the current position in the program of each of the modules, for example, 201, 202, 203, 204, 205, 205A, 205B, 206, etc., of the piping stress analysis system 200. The instructions fetched by the processor 301 from the memory unit 302 after being processed are decoded. The instructions are stored in an instruction register in the processor 301. After processing and decoding, the processor 301 executes the instructions, thereby performing one or more processes defined by those instructions.

At the time of execution, the instructions stored in the instruction register are examined to determine the operations to be performed. The processor 301 then performs the specified operations. The operations comprise arithmetic operations and logic operations. The operating system performs multiple routines for performing a number of tasks required to assign the input devices 307, the output devices 310, and memory for execution of the modules, for example, 201, 202, 203, 204, 205, 205A, 205B, 206, etc., of the piping stress analysis system 200. The tasks performed by the operating system comprise, for example, assigning memory to the modules, for example, 201, 202, 203, 204, 205, 205A, 205B, 206, etc., of the piping stress analysis system 200, and to data used by the piping stress analysis system 200, moving data between the memory unit 302 and disk units, and handling input/output operations. The operating system performs the tasks on request by the operations and after performing the tasks, the operating system transfers the execution control back to the processor 301. The processor 301 continues the execution to obtain one or more outputs. The outputs of the execution of the modules, for example, 201, 202, 203, 204, 205, 205A, 205B, 206, etc., of the piping stress analysis system 200 are displayed to the user on the GUI.

For purposes of illustration, the detailed description refers to the piping stress analysis system 200 being run locally on the computer system 300; however the scope of the present invention is not limited to the piping stress analysis system 200 being run locally on the computer system 300 via the operating system and the processor 301, but may be extended to run remotely over the communication network 209 by employing a web browser and a remote server, or other electronic devices. One or more portions of the computer system 300 may be distributed across one or more computer systems (not shown) coupled to the communication network 209.

Disclosed herein is also a computer program product comprising a non-transitory computer readable storage medium that stores computer program codes comprising instructions executable by at least one processor 301 for performing method steps using the piping stress analysis system 200, as disclosed in the detailed description of FIG 4 and FIG 5. In an embodiment, a single piece of computer program code comprising computer executable instructions performs one or more steps of the method according to the present invention. The computer program codes comprising computer executable instructions are embodied on the non-transitory computer readable storage medium. The processor 301 of the computer system 300 retrieves these computer executable instructions and executes them. When the computer executable instructions are executed by the processor 301, the computer executable instructions cause the processor 301 to perform the steps of the method for analyzing piping stresses for one or more pipes employing the piping stress analysis system 200 and the method for designing a support structure for one or more pipes by using the piping stress analysis system 200.

FIG 4 is a process flowchart illustrating a method 400 for analyzing piping stresses for one or more pipes employing the piping stress analysis system 200 illustrated in FIG 2. At step 401, the data reception module 201 of the piping stress analysis system 200, obtains piping data associated with the pipes. The data reception module 201 obtains piping data for a plurality of pipes and support structures, for example, trunnion pipes supporting these pipes. The piping data comprises, for example, about fifty cases each having a different pipe geometry, pipe material, and pipe loading. At step 402, the first mathematical model 202 which is a finite element analysis (FEA) model, of the piping stress analysis system 200 generates at least a first set of piping stresses comprising, membrane stresses and bending stresses, based on the piping data. The FEA model generates the membrane stresses and the bending stresses for all the cases for which the piping data has been obtained. The FEA model generates various stress plots and deformation plots to obtain the membrane stresses and the bending stresses. At step 403, the second mathematical model 203 which is a WRC 297 model, of the piping stress analysis system 200 generates at least a second set of piping stresses comprising, membrane stresses and bending stresses, based on the piping data comprising, the fifty cases that the FEA model analyzes.

At step 404, the stress optimization statistical model 204 of the piping stress analysis system 200, generates an optimized set of stresses based on the first set of piping stresses and the second set of piping stresses such that the optimized set of stresses can be used for designing a support structure for one or more pipes, in a reliable yet time and cost effective way. To generate an optimized set of stresses, at step 404A, a co-efficient generation module 205 of the stress optimization statistical model 204, obtains mathematical co-efficients based on the first set of piping stresses and the second set of piping stresses. To obtain mathematical co-efficients, at step 404B, a relationship plotting module 205A of the co-efficient generation module 205 plots two relationship plots of the first set of piping stresses and the second set of piping stresses. The first relationship plot is for the membrane stresses and the second relationship plot is for the membrane stresses and the bending stresses in combination. Furthermore, to obtain mathematical co-efficients, at step 404C, a relationship identification module 205B of the co-efficient generation module 205, identifies a data pattern in each of the relationship plots, associated with the first set of piping stresses and the second set of piping stresses. This data pattern is a line and based on a slope of the line, the co-efficient generation module 205 generates mathematical co-efficients for each of the relationship plots, that is, relationship plot of membrane stresses and relationship plot of membrane stresses and bending stresses. At step 404D, the co-efficient generation module 205 stores mathematical co-efficients along with the first set of piping stresses and the second set of piping stresses in a co-efficient database 207. Furthermore, to generate an optimized set of stresses, at step 404E, the stress computation module 206 of the stress optimization statistical model 204 generates an updated set of piping stresses using the mathematical co-efficients. These updated set of piping stresses are the optimized set of stresses, that is, induced stresses in a support structure that will be supporting the pipes. These updated set of stresses will be used for designing the support structure.

FIG 5 is a process flowchart illustrating a method 500 for determining piping stresses for a pipe by using the piping stress analysis system 200 illustrated in FIG 2. At step 501, the data reception module 201 of the piping stress analysis system obtains design data associated with the pipe. The design data comprises piping data associated with the pipe, that is, instead of a plurality of pipe geometries, pipe materials and pipe loading, the design data comprises data associated with geometry, material, and loading of the pipe to be supported by a support structure and data associated with the support structure intended to be used. At step 502, the second mathematical model 203, that is, the WRC 297 model, of the piping stress analysis system 200, generates initial piping stresses having membrane stresses and bending stresses based on the design data.

At step 503, the co-efficient generation module 205 of the piping stress analysis system 200 obtains the mathematical co-efficients from the co-efficient database 207 based on the initial piping stresses. For example, if the membrane stresses that the WRC 297 model generates, are in a range of about 50 N/mm2 and 150 N/mm2, then the mathematical co-efficients are 0.633 and 26. Similarly, if the sum of membrane stresses and bending stresses that the WRC 297 model generates, are in a range of about 160 N/mm2 and 480 N/mm2, then the mathematical co-efficients are 0.205 and 130. At step 504, the stress computation module 206 of the piping stress analysis system 200 generates updated piping stresses using the initial piping stresses and the mathematical co-efficients, for example, by using the equation as shown below:

$$\mathrm{Supdated} = \mathrm{C1}(\mathrm{Spredicted}) + \mathrm{C2}$$

Wherein Supdated is an updated piping stress value, C1 and C2 are mathematical co-efficients, and Spredicted is the stress value generated by the WRC 297 module. At step 504, the stress computation module 206 of the piping stress analysis system 200 validates the updated piping stresses based on a predefined stress range, that is, compares the updated piping stresses with the predefined stress range. If the updated piping stresses are not valid with respect to the predefined stress range, then at step 505, the design data associated with the support structure is modified, for example, by varying physical dimensions of the support structure, and the steps 502 to 504 are re-iterated until the updated piping stresses are found to be valid. At step 506, if the updated piping stresses are valid, the piping stress analysis system 200 transmits the updated piping stresses to a system (not shown) that designs the support structure for the pipe, that is, estimates physical dimensions of the support structure to be manufactured.

FIGS 6A-6B illustrate relationship plots 600A and 600B between one or more sets of piping stresses generated by the piping stress analysis system 200 illustrated in FIG 2. FIG 6A illustrates the relationship plot 600A having data representing membrane stresses generated for each case of the piping data, by the first mathematical model 202, that is, the finite element analysis (FEA) model and the second mathematical model 203, that is the WRC 297 model. Similarly, FIG 6B illustrates the relationship plot 600B having data representing sum of membrane stresses and bending stresses generated for each case of the piping data, by the first mathematical model 202 and the second mathematical model 203. The piping stress analysis system 200 identifies data points 601, 602, and 603 as shown in each of the FIGS 6A and 6B, such that other data points on each of the relationship plots 600A and 600B are accommodated within a line drawn through these data points. The piping stress analysis system 200 further determines a slope of these lines for each of the relationship plots 600A and 600B, using the equation given below, and then obtains the mathematical co-efficients.

$$y = mx + C$$

where 'x' and 'y' are the co-ordinates of the data points 601, 602, 603, etc., and 'm' and 'C' are the mathematical co-efficients.

FIG 7 illustrates a perspective view of an embodiment of a support structure 701 for which the stresses have been determined by employing the piping stress analysis system illustrated in FIG 2 and the process flow chart illustrated in FIG 5. The support structure 701 is a trunnion pipe supporting the pipe 702. The support structure 701 is manufactured cost effectively due to accurate estimation of induced stresses without running expensive finite element analysis models by employing the piping stress analysis system 200.

It will be readily apparent that the various methods, algorithms, and computer programs disclosed herein may be implemented on computer readable media appropriately programmed for computing devices. As used herein, "computer readable media" refers to non-transitory computer readable media that participate in providing data, for example, instructions that may be read by a computer, a processor or a similar device. Non-transitory computer readable media comprise all computer readable media, for example, non-volatile media, volatile media, and transmission media, except for a transitory, propagating signal.

The computer programs that implement the methods and algorithms disclosed herein may be stored and transmitted using a variety of media, for example, the computer readable media in a number of manners. In an embodiment, hard-wired circuitry or custom hardware may be used in place of, or in combination with, software instructions for implementation of the processes of various embodiments. Therefore, the embodiments are not limited to any specific combination of hardware and software. In general, the computer program codes comprising computer executable instructions may be implemented in any programming language. The computer program codes or software programs may be stored on or in one or more mediums as object code. Various aspects of the method and system disclosed herein may be implemented in a non-programmed environment comprising documents created, for example, in a hypertext markup language (HTML), an extensible markup language (XML), or other format that render aspects of a graphical user interface (GUI) 103H or perform other functions, when viewed in a visual area or a window of a browser program. Various aspects of the method and system disclosed herein may be implemented as programmed elements, or non-programmed elements, or any suitable combination thereof. The computer program product disclosed herein comprises one or more computer program codes for implementing the processes of various embodiments.

Where databases are described such as the coefficient database 207 and the piping database 208, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present invention can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present invention is not limited to a particular computer system platform, processor, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention in its aspects.

Reference signs:

| | |
|---|---|
| 100 | support structure (state of the art) |
| 101 | pipe (state of the art) |
| 102 | dynamic clamp (state of the art) |
| 103 | propping members (state of the art) |
| 105 | pipe-trunnion interface (state of the art) |
| 200 | piping stress analysis system |
| 201 | data reception module |
| 202 | first mathematical model |
| 203 | second mathematical model |
| 204 | stress optimization statistical model |
| 205 | co-efficient generation module |
| 205A | relationship plotting module |
| 205B | relationship identification module |
| 206 | stress computation module |
| 207 | co-efficient database |
| 208 | piping database |
| 209 | communication network |
| 300 | computer system |
| 301 | processor |
| 302 | memory unit |
| 303 | I/O controller |
| 304 | network interface |
| 305 | data bus |
| 306 | display unit |
| 307 | input devices |
| 308 | fixed media drive |
| 309 | removable media drive |
| 310 | output devices |
| 600A, 600B | relationship plot |
| 601, 602, 603 | data points |
| 701 | trunnion pipe/support structure |
| 702 | pipe |

## Claims

**1.** A piping stress analysis system (200) comprising:

- a data reception module (201) configured to obtain piping data associated with one or more pipes;
- a first mathematical model (202) configured to generate a first set of piping stresses based on the piping data;
- a second mathematical model (203) configured to generate a second set of piping stresses based on the piping data; **characterized by**:
- a stress optimization statistical model (204) comprising:
    - a co-efficient generation module (205) configured to obtain mathematical co-efficients based on the first set of piping stresses and the second set of piping stresses; and
    - a stress computation module (206) configured to generate an updated set of piping stresses using the mathematical co-efficients, wherein the updated set of piping stresses are used for designing a support structure (701) for the one or more pipes.

**2.** The piping stress analysis system (200) according to claim 1, wherein the piping data comprises physical data associated with the one or more pipes (702) to be supported by the support structure (701), wherein the physical data comprises an outer diameter, a wall thickness, a length, and a material of each of the one or more pipes (702).

**3.** The piping stress analysis system (200) according to any one of the claims 1, wherein the piping data comprises physical data associated with the support structure (701), wherein the physical data comprises an outer diameter, a wall thickness, a length, and a material of the support structure (701).

**4.** The piping stress analysis system (200) according to claim 3, wherein the support structure (701) is configured as a trunnion pipe.

**5.** The piping stress analysis system (200) according to any one of the claims 1, 2, and 3, wherein the piping data comprises external factors affecting the support structure (701) and the one or more pipes (702), wherein the external factors comprise a mechanical load exerted on the support structure (701), a mechanical load exerted on the one or more pipes (702), an internal pressure of the one or more pipes (702), and an internal temperature of the one or more pipes (702).

**6.** The piping stress analysis system (200) according to the claim 1, wherein the first set of piping stresses and the second set of piping stresses each comprise one or more of membrane stresses and bending stresses, experienced by the support structure (701).

7. The piping stress analysis system (200) according to the claim 1, wherein the co-efficient generation module (205) comprises:

- a relationship plotting module (205A) configured to generate at least one relationship plot (600A, 600B) of the first set of piping stresses and the second set of piping stresses; and
- a relationship identification module (205B) configured to identify a data pattern in the at least one relationship plot (600A, 600B), associated with the first set of piping stresses and the second set of piping stresses.

8. The piping stress analysis system (200) according to the claim 1, further comprising a co-efficient database (207) configured to store the mathematical co-efficients along with the first set of piping stresses and the second set of piping stresses.

9. A method for determining piping stresses for a pipe (702), by using the piping stress analysis system (200) according to claims 1-8, and comprising:

- obtaining design data associated with the pipe (702) by the data reception module (201) of the piping stress analysis system (200) ;
- generating initial piping stresses based on the design data by the second mathematical model (203) of the piping stress analysis system (200) ;
- obtaining the mathematical co-efficients from the co-efficient database (207) by the co-efficient generation module (205) of the piping stress analysis system (200) based on the initial piping stresses; and
- generating updated piping stresses using the initial piping stresses and the mathematical co-efficients, by the stress computation module (206) of the piping stress analysis system (200), wherein the updated set of piping stresses are used for designing a support structure (701) for the pipe (702).

10. The method according to claim 9, further comprising validating the updated piping stresses based on a predefined stress range by the stress computation module (206) of the piping stress analysis system (200).

11. A method for analyzing piping stresses for one or more pipes (702), the method comprising:

- obtaining piping data associated with the one or more pipes (702);
- generating at least a first set of piping stresses based on the piping data by a first mathematical model (202);
- generating at least a second set of piping stresses based on the piping data by a second mathematical model (203); **characterized by**:
- obtaining mathematical co-efficients based on the first set of piping stresses and the second set of piping stresses; and
- generating an updated set of piping stresses using the mathematical co-efficients, wherein the updated set of piping stresses are used for designing a support structure (701) for one or more pipes (702).

12. The method according to claim 11, wherein obtaining the mathematical co-efficients comprises:

- generating at least one relationship plot (600A, 600B) of the first set of piping stresses and the second set of piping stresses; and
- identifying a data pattern in the at least one relationship plot (600A, 600B), associated with the first set of piping stresses and the second set of piping stresses.

FIG 1

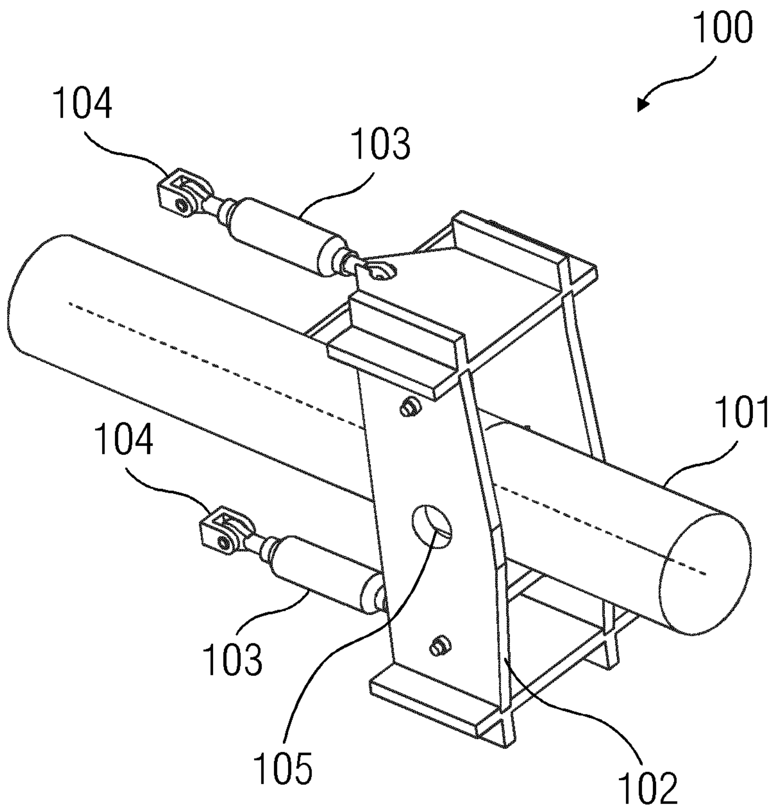


(PRIOR ART)

FIG 2

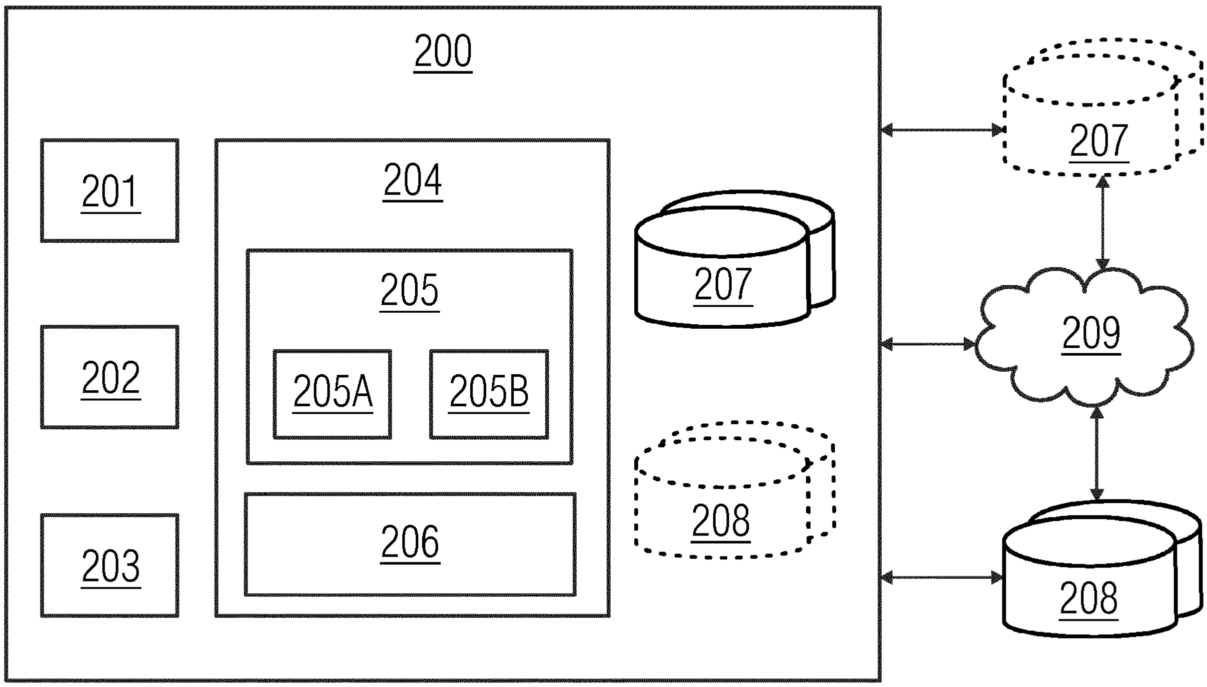

FIG 3

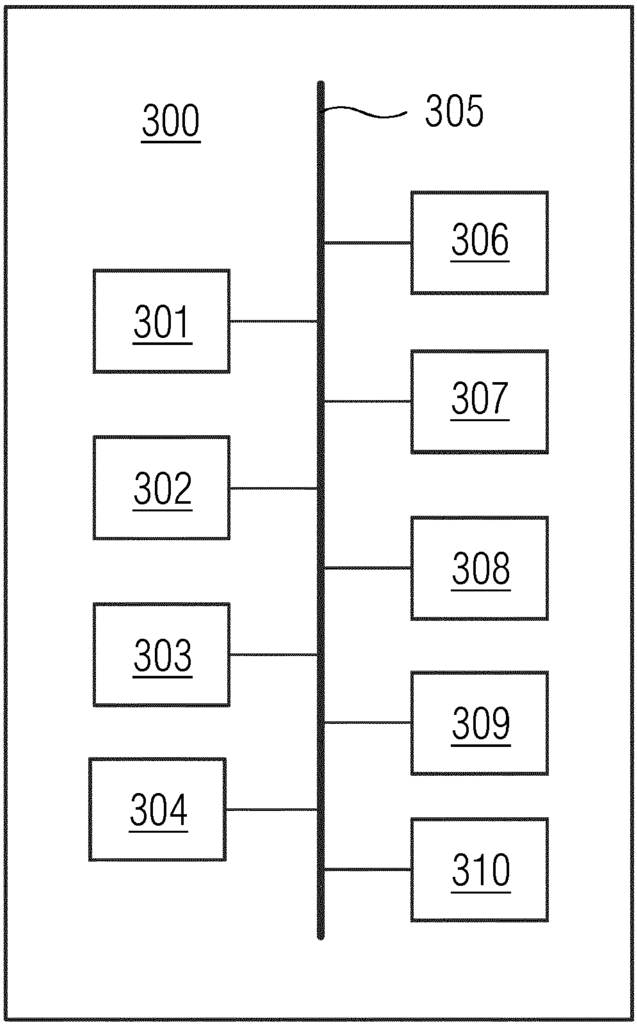

FIG 4

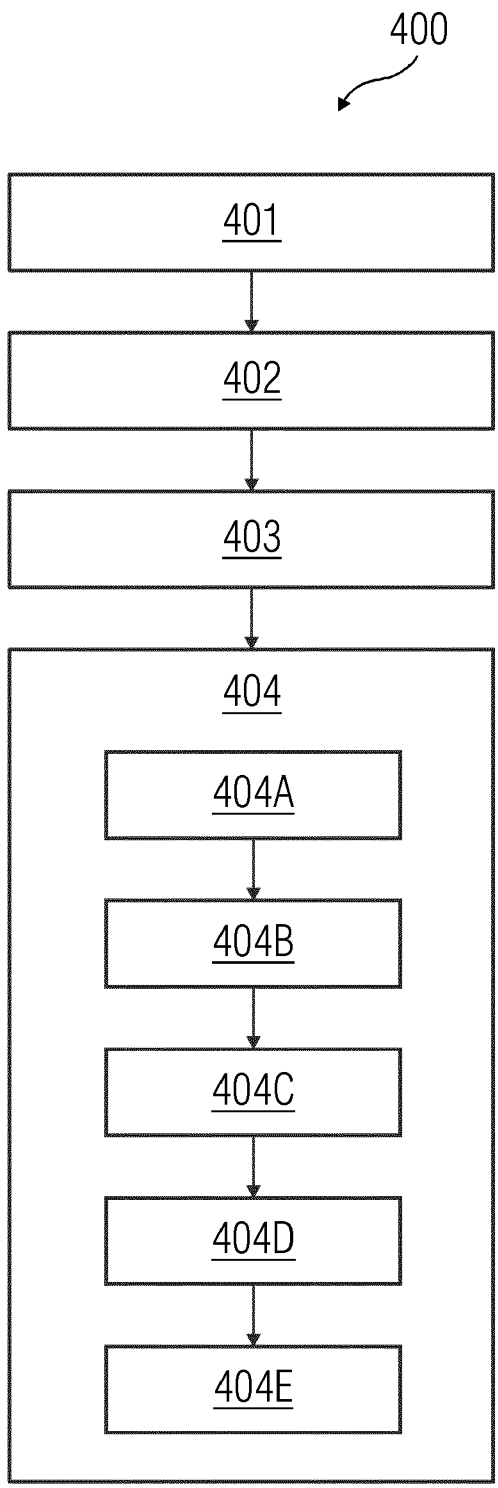

FIG 5

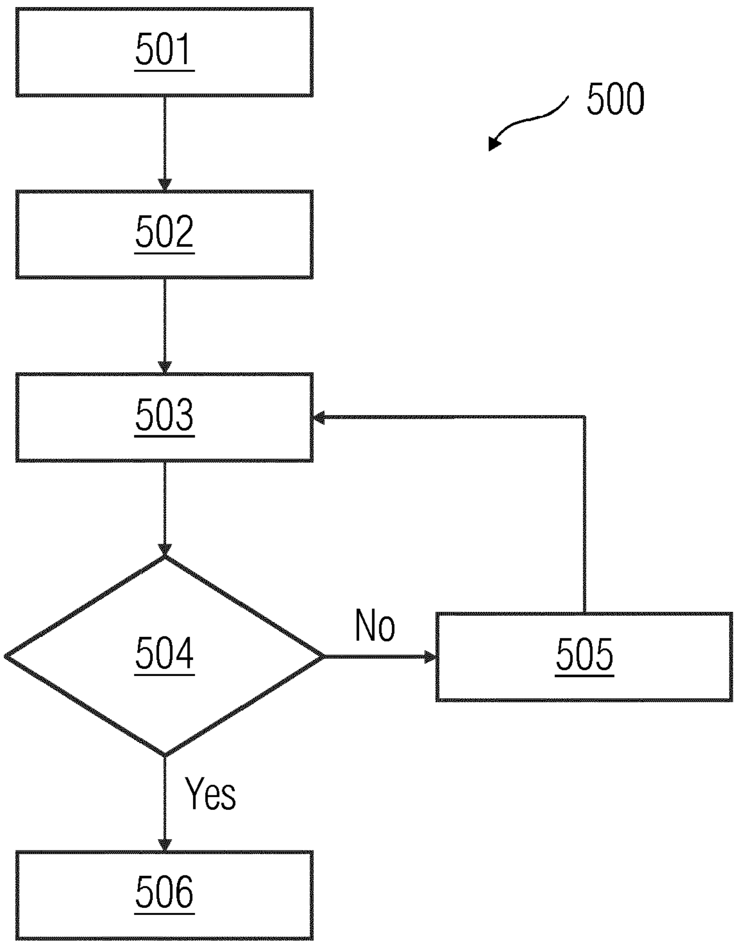

FIG 6A

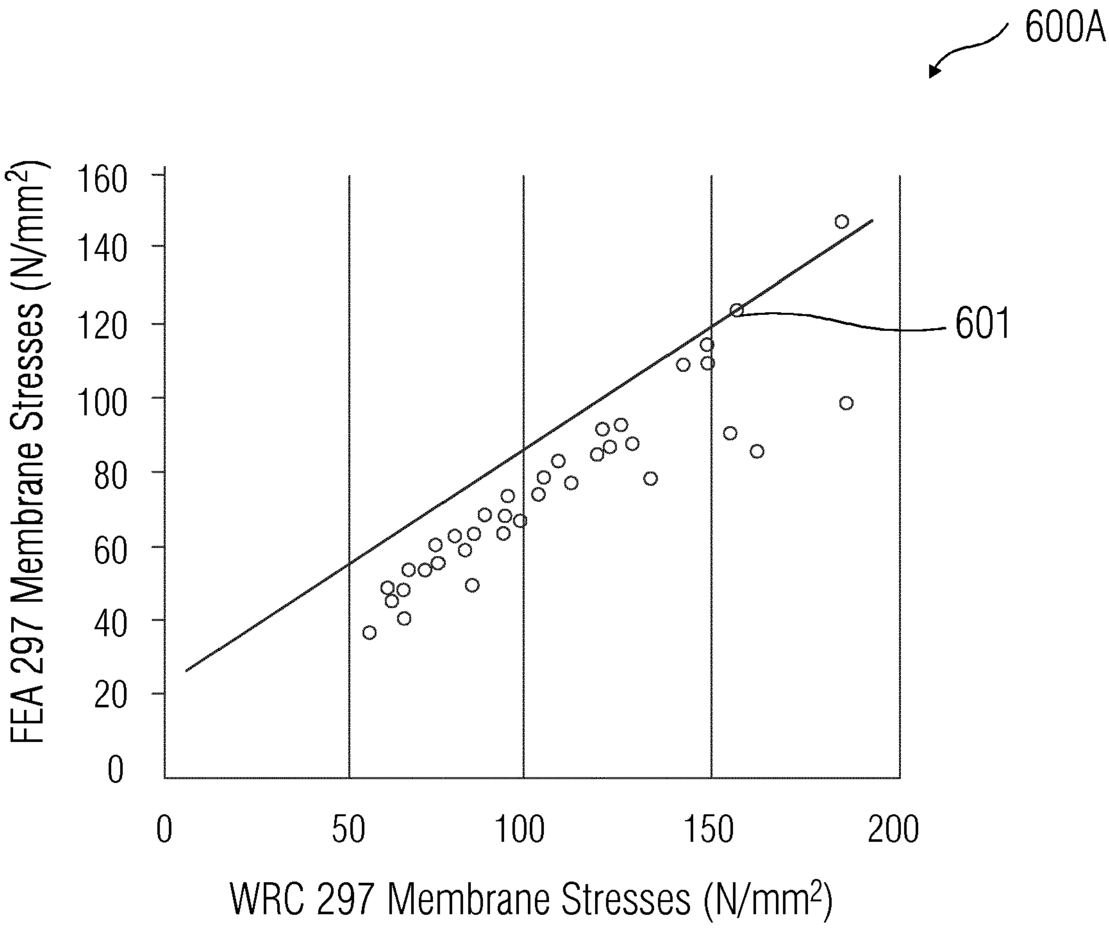
600A
601
160
140
120
100
80
60
40
20
0
FEA 297 Membrane Stresses (N/mm2)
0
50
100
150
200
WRC 297 Membrane Stresses (N/mm2)

FIG 6B

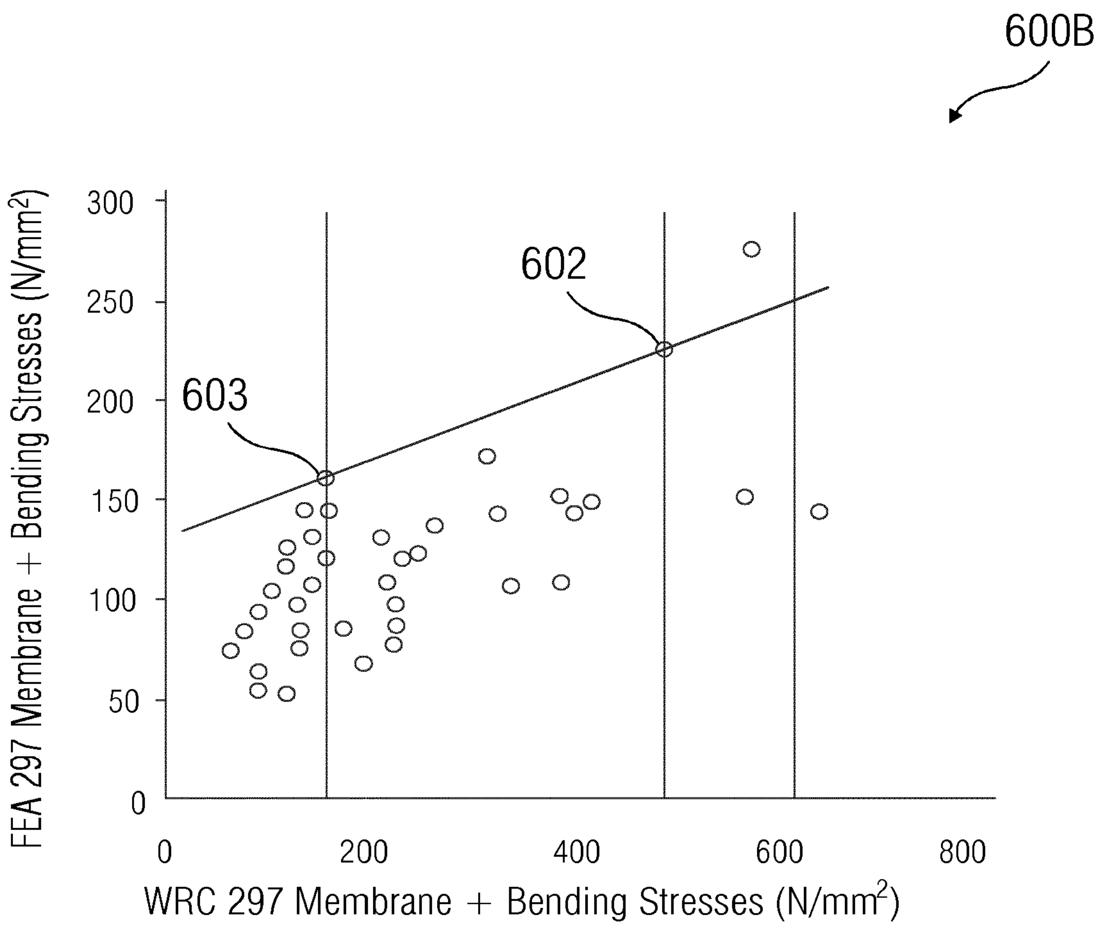
600B
602
603
300
250
200
150
100
50
0
0
200
400
600
800
FEA 297 Membrane + Bending Stresses (N/mm2)
WRC 297 Membrane + Bending Stresses (N/mm2)

FIG 7

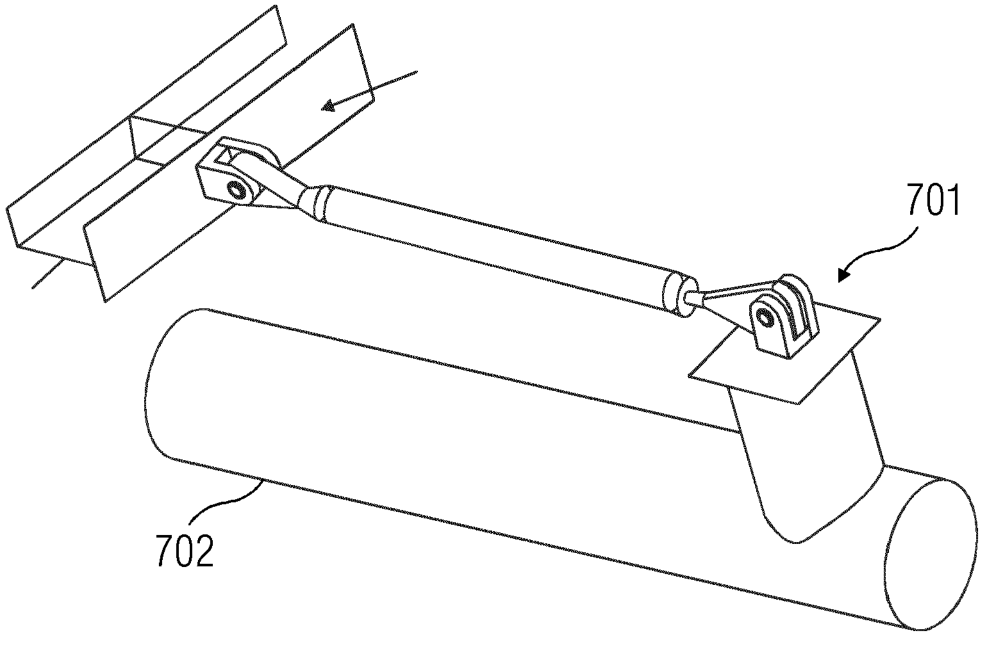

Europäisches Patentamt
European Patent Office
Office européen des brevets

# EUROPEAN SEARCH REPORT

Application Number
EP 18 16 4568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANINDYA BHATTACHARYA: "Stress Analysis of Pipe Support Attachments: A Comparison of Analytical Methods and Finite Element Analysis for Circular and Non-Circular Attachments", PROCEEDINGS OF THE ASME 2013 PRESSURE VESSELS & PIPING DIVISION CONFERENCE PVP2013, vol. 3, 14 July 2013 (2013-07-14), pages 1-17, XP055491954, DOI: 10.1115/PVP2013-97622 ISBN: 978-0-7918-5567-6 * sections Introduction; page 8, right-hand column, paragraph 5; tables 1-6 * * abstract * * the whole document * ----- | 1-12 | INV. G06F17/50 |
| X | DATABASE COMPENDEX [Online] ENGINEERING INFORMATION, INC., NEW YORK, NY, US; 2001, BASAVARAJU C: "Analysis of a pipe with a trunnion attachment for moment loadings", XP002782966, Database accession no. E2003487752825 * abstract * & AMERICAN SOCIETY OF MECHANICAL ENGINEERS, PRESSURE VESSELS AND PIPING DIVISION (PUBLICATION) PVP - PRESSURE VESSEL AND PIPING DESIGN AND ANALYSIS - 2001 2001 AMERICAN SOCIETY OF MECHANICAL ENGINEERS US, vol. 430, 2001, pages 125-135, ----- | 1,9,11 | TECHNICAL FIELDS SEARCHED (IPC) G06F |

-/--

The present search report has been drawn up for all claims

1

| Place of search | Date of completion of the search | Examiner |
|---|---|---|
| Munich | 31 August 2018 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 18 16 4568

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE COMPENDEX [Online] ENGINEERING INFORMATION, INC., NEW YORK, NY, US; 1990, HANKINSON R F ET AL: "Stress indices for hollow circular trunnions welded to reinforcing pads attached to piping", XP002782967, Database accession no. EIX90120436840 * abstract * & AMERICAN SOCIETY OF MECHANICAL ENGINEERS, PRESSURE VESSELS AND PIPING DIVISION (PUBLICATION) PVP - DESIGN AND ANALYSIS OF PIPING AND COMPONENTS 1990 INCLUDING VALVE TESTING AND APPLICATIONS 1990 PUBL BY ASME, vol. 188, 1990, pages 35-39, ----- | 1,9,11 | |
| | | | TECHNICAL FIELDS SEARCHED (IPC) |

1

The present search report has been drawn up for all claims

| Place of search | Date of completion of the search | Examiner |
|---|---|---|
| Munich | 31 August 2018 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)